Europäisches Patentamt

**European Patent Office**

**Office européen des brevets**

(11) Veröffentlichungsnummer: **0 174 604**
**B1**

(12) **EUROPÄISCHE PATENTSCHRIFT**

(45) Veröffentlichungstag der Patentschrifft:
21.03.90

(21) Anmeldenummer: **85111207.8**

(22) Anmeldetag: **05.09.85**

(51) Int. Cl.⁵: **F 24 D 13/02, H 05 B 3/28**

(54) **Wand-, Decken- und/oder Bodenausbildung.**

(30) Priorität: **13.09.84 DE 3433702**

(43) Veröffentlichungstag der Anmeldung:
**19.03.86 Patentblatt 86/12**

(45) Bekanntmachung des Hinweises auf die Patenterteilung:
**21.03.90 Patentblatt 90/12**

(84) Bennante Vertragsstaaten:
**AT BE CH DE FR GB IT LI LU NL SE**

(56) Entgegenhaltungen:
**EP-A-0 049 496**
**DE-A-1 943 007**
**DE-A-2 244 157**

(73) Patentinhaber: **Buchtal GmbH Keramische Betriebe**
**D-8472 Schwarzenfeld/Opf. (DE)**

(72) Erfinder: **Bard, Martin, Dipl.-Ing.**
**Seminargasse 26**
**D-8450 Amberg (DE)**

(74) Vertreter: **Betzler, Eduard, Dipl.-Phys.**
**Postfach 70 02 09 Plinganserstrasse 18a**
**D-8000 München 70 (DE)**

**Beschreibung**

Die Erfindung betrifft eine Wand-, Decken- und/oder Bodenausbildung gemäß dem Oberbegriff des Patentanspruches 1.

Es ist bekannt, Räume mittels Raumheizkörpern zu beheizen, die im allgemeinen unterhalb von Fensteröffnungen angebracht sind, damit die von ihnen erwärmte Raumluft über die Fensteröffnungen hochsteigt und so einen Warmluftvorhang vor der Fensteröffnung erzeugt. Auch bei an Wänden aufgestellten Heizkörpern entsteht eine Luftbewegung vom Boden zur Decke des mit ihnen beheizten Raumes, wobei die vom Heizkörper in den Raum abgestrahlte Wärme nur eine geringe Rolle spielt.

In Räumen angebrachte übliche reine Strahlungsheizkörper besitzen nur einen örtlich sehr begrenzten Strahlungsbereich und arbeiten mit hohen Temperaturen.

Zum Stande der Technik gehören ferner Fußbodenheizungen, bei denen im Estrich oder unterhalb des obersten Bodenbelages mit flüssigem Wärmeträger beaufschlagte Heizschlangen, aber auch elektrische Heizleiter untergebracht sind. Fußbodenheizungen sind im Aufbau jedoch vergleichsweise umständlich und teuer und bedürfen einer vergleichsweise aufwendigen Steuerung.

Auch flächige Gebilde, z. B. ein aus der DE-B-1 615 257 bekannt gewordener elektrischer Heizfilm gehören bereits zum Stande der Technik. Andere Lehren gehen dahin, Widerstandsschichten, aber auch leitende Metallfolien zwischen isolierende Schichten oder Folien einzubetten und so zu flächigen Heizelementen z. B. für eine Fußboden-Wärme-Klima-Anlage zu kommen (DE-A 3 026 098 oder auch DE-A 2 306 271).

Keine dieser Lehren offenbart aber eine Möglichkeit, Gestaltungselemente der Raumbegrenzung selbst so auszubilden, daß sie einzeln, in Gruppen oder als die gesamte Raumbegrenzung bzw. eines wesentlichen Teiles davon die Aufgabe der Beheizung des Raumes oder eines zu erwärmenden bzw. warmzuhaltenden Teiles der Raumumgrenzung übernehmen können.

Aus einem Prospekt, herausgegeben von der Firma Canespa KG, 3005 Hemmingen-Westerfeld, Gutenbergstraße 13, im Jahre 1957, läßt sich bereits ein drahtloses Heizsystem "Canespa-Therm" entnehmen, bei dem auf der Rückseite von Formkörpern, und zwar von keramischen Platten eine Heizlackschicht als elektrische Widerstandsbeschichtung aufgebracht ist. Diese Heizlackschicht ist durch einen Polyurethanschaumkörper abgedeckt. Dieses System konnte sich jedoch nicht durchsetzen, da es immer wieder zu örtlichen Überhitzungen mit daraus resultierenden schädlichen Weiterungen kam, die sogar zur Gefährdung von Personen und Sachen führten.

Es ist bereits ein Flachengebilde zur elektrischen Heizung von Bodenbelägen bekannt (DE-A-1 943 007), bei dem zwischen Belagschicht und Untergrund ein flächiges Widerstandsheizelement angeordnet wird, welches aus einer beidseitig durch Kunststoffschichten abgedeckten leitenden Zwischenschicht gebildet ist. Das Widerstandsheizelement ist mittels einer geeigneten Klebmittelzusammensetzung auf den Untergrund aufgeklebt und die Belagschicht ist auf das Widerstandsheizelement aufgeklebt.

Die Praxis zeigt, daß insbesondere die Klebverbindungen zwischen den einzelnen Schichten Probleme bereiten können und insbesondere auf Dauer Ablösungserscheinungen zwischen den einzelnen Schichten nicht ausgeschlossen sind, was zu einem Abfallen der Belagschicht führen kann.

Aufgabe der Erfindung ist es, eine Wand-, Decken -oder Bodenausbildung mit Hilfe von Gestaltungselementen von Raumumgrenzungen vorzuschlagen, die als solche der Beheizung des mit ihr versehenen Raumes dienen kann und bei der ein dauerhafter Verbund der Belagschicht mit dem Untergrund gewährleistet ist.

Diese Aufgabe wird erfindungsgemäß durch die im kennzeichnenden Teil des Patentanspruches 1 oder des Patentanspruches 7 enthaltenen Merkmale gelöst.

Nach Maßgabe der Erfindung ist die Belagschicht aus keramischen Formkörpern, insbesondere keramischen Platten gebildet, welche als Gestaltungselemente von Raumumgrenzungen zur Beheizung des mit ihr versehenen Raumes dienen. Trotz des Gewichts des keramischen Belages ist ein Löslosen bzw. ein Abfallen des keramischen Belages verhindert, weil infolge der örtlichen Durchbrechung des Widerstandsheizelementes ein sehr fester Verbund zwischen den einzelnen Schichten gewährleistet ist, da Untergrund und Belag aus keramischen Platten mittels eines die Löcher durchsetzenden Klebers miteinander verbunden sind. In einer weiteren Alternative wird für eine ausreichende Bindung zwischen Widerstandsschicht und Deckschicht bzw. Unterschicht des Widerstandsheizelementes dafür gesorgt, daß die Widerstandsschicht so ausgebildet ist, daß sie örtlich durch Druckaufbringung auf die Deck- und Unterschicht verdrängbar ist, und daß Deck- und Unterschicht an durch eine derartige Verdrängung der widerstandsschicht gebildeten Bereichen miteinander durch Ultraschalleinwirkung verschweißt sind. In einem solchen Fall wird durch die stellenweise Verbindung von Deckschicht und Unterschicht erreicht, daß es nicht zu einem Ablösen dieser beiden Schichten von der Widerstandsschicht und damit zu einem Auftrennen der Widerstandsschicht kommen kann, wodurch ein Abfallen des keramischen Belages wirkungsvoll verhindert ist.

In einer zweckmäßigen Weiterbildung sind die Lochränder der örtlichen Durchbrechungen von Deck- und Unterschicht des Widerstandsheizelementes miteinander verschweißt, um Streuströme im Bereich der Löcher zu verhindern.

Man kann aber auch in die Löcher jeweils einen aus elektrisch isolierendem Material bestehenden Niet, vorzugsweise einen Hohlniet einsetzen. Bei Verwendung eines Vollniets muß dieser selbstverständlich nachträglich ausgebohrt werden.

Eine andere Möglichkeit der Isolierung der Lochbegrenzungswände besteht darin, jeweils ein aus einem elektrisch isolierenden Material bestehendes Schlauchstück in die Löcher einzusetzen, das erforderlichenfalls wenigstens im Randbereich von Deck- und Unterschicht mit diesen in geeigneter Weise verbunden ist.

Ferner besteht die Möglichkeit, in die Löcher jeweils einen Isolierstopfen einzusetzen oder einzugießen, der dann, wenn es sich um einen Vollpfropfen handelt, so ausgebohrt werden muß, daß für die Kleberschichten auf dem Untergrund und der Plattenrückseite Verankerungsstellen entstehen.

Besonders vorteilhaft kann es sein, wenn gemäß einer abgeänderten Ausführungsform der Erfindung das Widerstandsheizelement unter Belassung von von ihm nicht abgedeckter Bereiche flächenmäßig gegliedert ist, die Gliedflächen untereinander elektrisch in Verbindung stehen und in den von dem Widerstandsheizelement nicht abgedeckten Bereichen örtlich Durchbrechungen des Widerstandsheizelements vorgesehen sind.

Nachfolgend werden bevorzugte Ausführungsbeispiele der Erfindung anhand der Zeichnung beschrieben.

Darin zeigen:

Fig. 1    eine Draufsicht auf eine Wandausbildung, bei der aufgelegte Keramikplatten lediglich schematisch durch gestrichelte Linien angedeutet sind;

Fig. 2    einen vergrößerten Teilquerschnitt durch die Anordnung längs der Linie II - II der Fig. 1;

Fig. 3    einen vergrößerten Teilquerschnitt durch die Anordnung nach Fig. 1 längs der Linie III - III der Fig. 1, jedoch mit einer anderen Ausführungsform der Wandausbildung;

Fig. 4    einen stark vergrößerten Teilschnitt durch die Platte nach Fig. 3 mit weiteren Abänderungen im Aufbau;

Fig. 5    einen stark vergrößerten Teilschnitt durch die Platte nach Fig. 3, mit weiteren Abänderungen im Aufbau; und in

Fig. 6    eine ebenfalls mögliche weitere Abänderung mit der Andeutung eines Verfahrersschrittes.

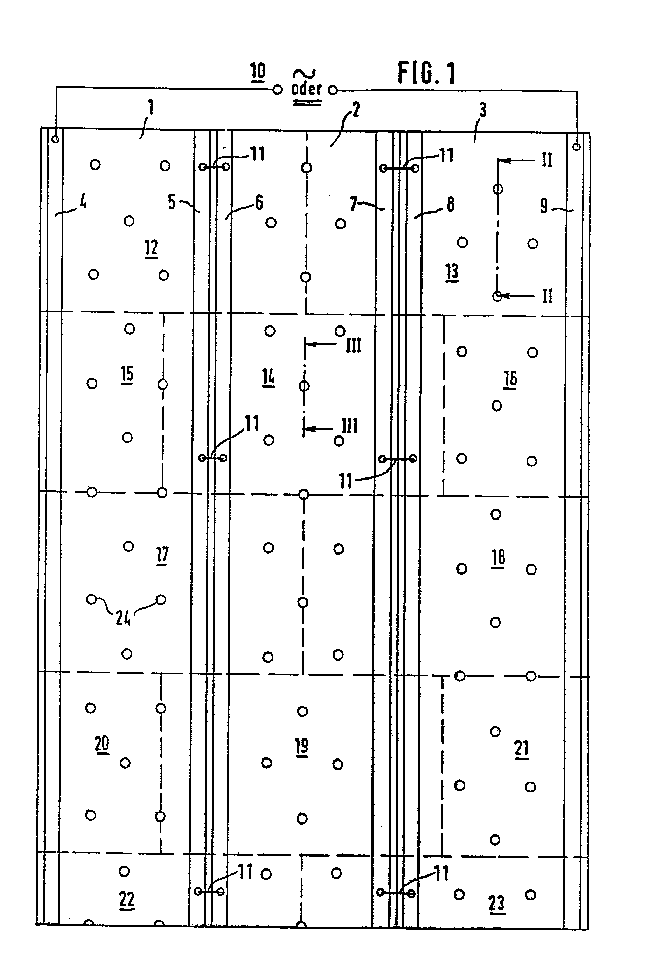

Nach Fig. 1 sind auf einer beispielsweise der Zeichenfläche entsprechenden Grundfläche Bahnen 1, 2, 3 eines Widerstandsheizelementes ausgelegt, die längs ihrer Kanten Kupferbänder 4, 5, 6, 7, 8 und 9 aufweisen. Den beiden Kupferbändern 4 und 9 wird von einer bei 10 schematisch angedeuteten Stromquelle Strom zugeführt, so daß sich die Widerstandsheizelemente entsprechend aufheizen. Die Verbindung zwischen den Elementen 1 und 2 bzw. 2 und 3 ist durch Verbindungsanschlüsse 11 hergestellt.

Die mögliche Ausgestaltung der leitenden Zwischenschicht des Widerstandsheizelementes in einer Ausbildung, bei der es unter Belassung von von ihr nicht abgedeckten Bereichen flächenmäßig gegliedert ist, ist im einzelnen nicht dargestellt. Es kann sich z. B. um eine mäanderartige Anordnung der Widerstandsschicht oder um eine Aufgliederung derselben in mehrere flächige, aber elektrisch miteinander verbundene oder nachträglich noch zu verbindende Teilschichten in Form von Bändern, Flächenstücken od. dgl. handeln. Die Auswahl des entsprechenden Musters richtet sich nach den örtlichen Gegebenheiten und/oder den technischen Erfordernissen.

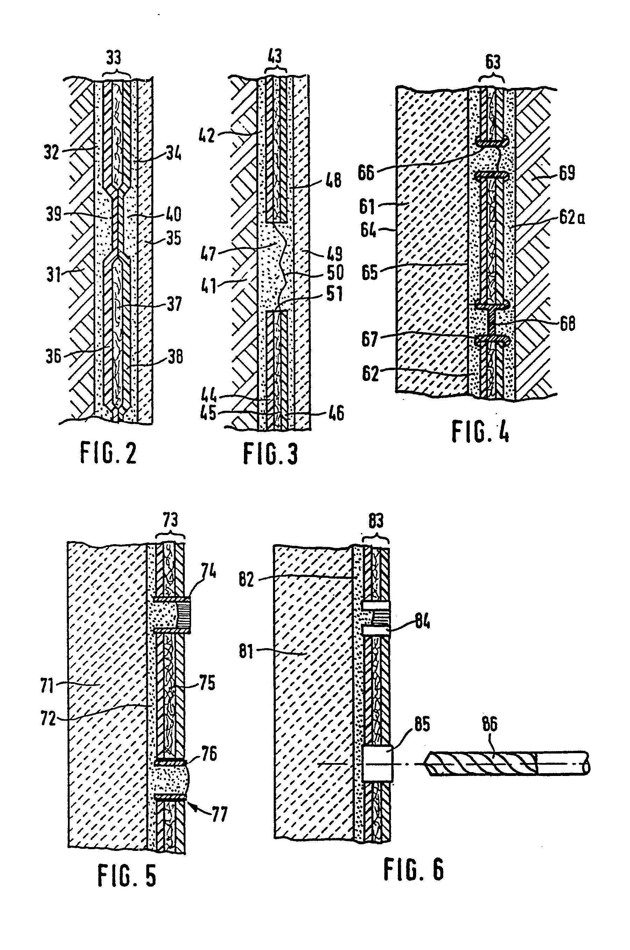

Auf den Aufbau der einzelnen Widerstandsheizelemente wird später im Zusammenhang mit der Beschreibung der Fig. 2 und 3 noch näher eingegangen werden.

Auf den Widerstandsheizelementen sind beim Ausführungsbeispiel vergleichsweise großflächige keramische Platten 12 bis 23 ausgelegt, deren Format und Umfangsgestaltung beliebig gewählt werden kann.

In Fig. 2 ist mit 31 der Untergrund bezeichnet, der gegebenenfalls verputzt sein kann. Es kann sich um eine Wand, um eine Decke oder auch um einen Boden handeln.

Auf diesem Untergrund befindet sich eine Kleberschicht 32, auf der das Widerstandsheizelement 33 verlegt ist. Dieses Element ist mit einer weiteren Kleberschicht 34 abgedeckt, mit deren Hilfe die keramische Platte 35 am Element 33 befestigt ist. Das Element 33 besteht aus einer Polyester-Unterschicht 36, einer Widerstandsschicht 37 und einer Deckschicht 38. Beim wiedergegebenen Ausführungsbeispiel sind die Unterschicht und die Deckschicht örtlich bei 39 und 40 unter Verdrängung der Widerstandsschicht 37 miteinander in Berührung gebracht und beispielsweise durch Ultraschallschweißen miteinander verbunden. Die Haftung zwischen Polyester-Folienoberfläche und Untergrund bzw. keramischer Platte muß mit Hilfe eines Klebers bewirkt werden, der eine Bindung zwischen diesen unterschiedlichen Flächen herzustellen vermag. Vorzugsweise erfolgt die Verbindung so, daß zuerst der Kleber 32 auf den Untergrund 31 aufgebracht wird, worauf die freie Oberfläche der Unterschicht 36 mit einem Primer behandelt und nach dieser Behandlung das Widerstandsheizelement 33 an dem Untergrund 31 befestigt. Nunmehr wird die jetzt noch freiliegende Oberfläche der Deckschicht mit einem Primer überstrichen und anschließend die mit dem Kleber 34 versehene Platte 35 aufgelegt.

Bei dem Kleber handelt es sich beispielsweise um das unter dem Handelsnamen PCI-Lastoment 2 bekannte Produkt. Ein dazu brauchbarer Primer ist unter der Handelsbezeichnung Collastic FH im Handel erhältlich.

Bei der Ausführungsform, wie sie schematisch in Fig. 3 angedeutet ist, bedarf es keiner Verwendung eines Spezialklebers. Es genügt die Verwendung eines Klebers, der in der Lage ist, den Untergrund mit der keramischen Platte zu verbinden. In Fig. 3 ist mit 41 der Untergrund bezeichnet, auf den ein Kleber 42 der angegebenen Art aufgebracht ist. Dann schließt sich das Widerstandsheizelement 43 an. Dieses Element besteht wie das Element 33 aus einer Unterschicht 44, einer Widerstandsschicht 45 und einer Deckschicht 46. Dieses Widerstandsheizelement 43 ist örtlich wie in Fig. 1 durch die kleinen Kreise 24 angedeutet ausgestanzt. Das Stanzloch ist in Fig. 3 mit 47 bezeichnet. In dieses Stanzloch dringt sowohl Kleber 42 als auch Kleber 48 ein, der auf die Platte 49 aufgetragen ist. Die Zusammentreffstelle der beiden Kleberschichten ist durch die Linie 50 schematisch angedeutet. Vorzugsweise erfolgt das Stanzen mit Hilfe eines erwärmten Stanzstempels, so daß die Ränder der Unterschicht und der Deckschicht bei 51 miteinander verschweißt sind und damit die Widerstandsschicht 45 nicht mit dem Kleber im Stanzloch in Berührung kommen kann.

Bei der Ausführungsform nach Fig. 4 bezeichnet 61 eine keramische Platte, auf deren der Sichtseite 64 abgewendeten Seite 65 eine Kleberschicht 62 aufgebracht ist. Auf dieser Kleberschicht 62, die nur an der Platte 61 zu haften braucht, befindet sich das Widerstandsheizelement 63, dessen Aufbau dem der Widerstandsheizelemente 33 und 43 entspricht, so daß er hier nicht mehr näher beschrieben zu werden braucht. Das Widerstandsheizelement ist in einem z. B. aus Fig. 1 ersichtlichen Raster ausgestanzt und in die entstandenen Löcher sind Niete 66 bzw. 67 aus einem isolierenden Material eingesetzt. Der Niet 67 läßt eine Mittelwand 68 und damit erkennen, daß auch in diesem Fall Kleber sowohl aus der Klebmittelschicht 62 als auch aus einer an einem Untergrund 69 angebrachten Klebmittelschicht 62a Klebmittel in die so gebildeten Sacklöcher eindringen kann und auch so bereits eine ausreichende Fixierung der Platte 61 über das Klebmittel 62 bzw. 62a an dem Untergrund 69 erreicht werden kann.

Fig. 5 zeigt eine Platte 71 mit Klebmittelschicht 72 und Widerstandsheizelement 73, in das Löcher eingestanzt sind. Das obere Stanzloch ist mit einem an den Enden etwas überstehenden, fest eingepaßten Schlauch- oder Rohrstück 74 besetzt, das die leitende Widerstandsschicht 75 isoliert. Im unteren Stanzloch ist ein Schlauch- oder Rohrstück 76 eingesetzt, das bei 77 eingeklebt ist. Auch damit läßt sich eine gute Isolierung der Widerstandsschicht im Stanzlochbereich, wo das Klebmittel in das Stanzloch eindringt, erreichen.

Fig. 6 zeigt einen Teil einer Platte 81 mit Klebmittelschicht 82 und Widerstandsheizelement 83. Das obere Stanzloch ist mit einem eingepaßten, ziemlich dickwandigen Hohlstopfen 84 besetzt, der aus einem Vollstopfen 85 (s. unteres Stanzloch) dadurch entstanden sein kann, daß ein solcher nach dem Einsetzen in das Stanzloch, was nicht unbedingt nach dem Aufkleben der Folie auf die Platte zu erfolgen braucht, entsprechend aufgebohrt wird. Dieses Aufbohren ist durch den Bohrer 86 symbolisch angedeutet.

## Patentansprüche

1. Wand-, Decken- und/oder Bodenausbildung, bestehend aus einem unverputzten oder verputzten Untergrund (31, 41, 69) und einer Belagschicht sowie einem zwischen Belagschicht und Untergrund (31, 41, 69) angeordneten flächigen Widerstandsheizelement (33, 43, 63, 73, 83), das sich aus einer Kunststoff-Unterschicht, einer mit Zu- und Ableitungen versehenen leitenden Zwischenschicht und einer Kunststoff-Deckschicht zusammensetzt, wobei das Widerstandsheizelement (33, 43, 63, 73, 83) mit Hilfe einer Klebmittelzusammensetzung (32, 42, 62, 72, 82), die sowohl am Untergrund (31, 41, 69) als auch an der freien Kunststoffoberfläche der Unterschicht (36, 44) des Widerstandsheizelementes haftet, auf dem Untergrund aufgeklebt ist, während die Belagschicht auf der freien Oberfläche der Kunststoff-Deckschicht (38, 46) mit Hilfe einer sowohl an der Oberfläche dieser Kunststoff-Deckschicht als auch an der der Sichtseite abgewendeten Seite der Belagschicht haftenden Klebmittelzusammensetzung (34, 48) aufgeklebt ist, dadurch *gekennzeichnet,* daß die Belagschicht aus keramischen Formkörpern, insbesondere Platten (12 bis 23, 35, 49, 61, 71, 81) besteht und die Deck- und die Unterschicht des Widerstandsheizelements (33, 43, 63, 73, 83) aus Polyester gebildet sind, und daß das zwischen Untergrund und Belag aus keramischen Platten befindliche Widerstandsheizelement örtlich durchbrochen, z. B. durchstanzt ist (47) und daß Untergrund und Belag (49) aus keramischen Formkörpern mittels eines die Stanzlöcher durchsetzenden, wenigstens an den keramischen Formkörpern und am Untergrund haftenden Klebers (42, 48) miteinander verbunden sind.

2. Wand-, Decken- und/oder Bodenausbildung nach Anspruch 1, dadurch *gekennzeichnet,* daß die Lochränder von Deck- und Unterschicht miteinander verschweißt sind.

3. Wand-, Decken- und/oder Bodenausbildung nach Anspruch 1, dadurch *gekennzeichnet,* daß in die Löcher jeweils ein isolierender Hohlniet (66, 67) eingesetzt ist.

4. Wand-, Decken- und/oder Bodenausbildung nach Anspruch 1, dadurch *gekennzeichnet,* daß in die Löcher jeweils ein Schlauchstück (74) aus einem Isoliermaterial eingesetzt ist.

5. Wand-, Decken- und/oder Bodenausbildung nach Anspruch 1, dadurch *gekennzeichnet,* daß in die Löcher jeweils ein Isolierstopfen (85) eingesetzt ist, der eine gegebenenfalls nachträglich eingebohrte Durchtrittsöffnung aufweist.

6. Wand-, Decken- und/oder Bodenausbildung nach Anspruch 1, dadurch *gekennzeichnet,* daß das Widerstandsheizelement unter Belassung von von ihm nicht abgedeckter Bereiche flächenmäßig gegliedert ist, die Gliedflächen untereinander elektrisch in Verbindung stehen und in den von dem Widerstandsheizelement nicht abgedeckten Bereichen örtlich Durchbrechungen des Widerstandsheizelementes vorgesehen sind.

7. Wand-, Decken- und/oder Bodenausbildung, bestehend aus einem unverputzten oder verputzten Untergrund (31, 41, 69) und einer Belagschicht sowie einem zwischen Belagschicht und Untergrund (31, 41, 69) angeordneten flächigen Widerstandsheizelement (33, 43, 63, 73, 83), das sich aus einer Kunststoff-Unterschicht, einer mit Zu- und Ableitungen versehenen leitenden Zwischenschicht und einer Kunststoff-Deckschicht zusammensetzt, wobei das Widerstandsheizelement (33, 43, 63, 73, 83) mit Hilfe einer Klebmittelzusammensetzung (32, 42, 62, 72, 82), die sowohl am Untergrund (31, 41, 69) als auch an der freien Kunststoffoberfläche der Unterschicht (36, 44) des Widerstandsheizelementes haftet, auf dem Untergrund aufgeklebt ist, während die Belagschicht auf der freien Oberfläche der Kunststoff-Deckschicht (38, 46) mit Hilfe einer sowohl an der Oberfläche dieser Kunststoff-Deckschicht als auch an der der Sichtseite abgewendeten Seite der Belagschicht haftenden Klebmittelzusammensetzung (34, 48) aufgeklebt ist, dadurch *gekennzeichnet*, daß die Belagschicht aus keramischen Formkörpern, insbesondere Platten (12 bis 23, 35, 49, 61, 71, 81) besteht und die Deck- und Unterschicht aus Polyester gebildet sind und daß die Widerstandsschicht so ausgebildet ist, daß sie örtlich durch Druckaufbringung auf die Deck- und Unterschicht verdrängbar ist, und daß die Deck- und Unterschicht an durch eine derartige Verdrängung der Widerstandsschicht gebildeten Bereichen miteinanter durch Ultraschalleinwirkung verschweißt sind.

## Claims

1. A wall, ceiling and/or floor construction comprising a plastered or unplastered base (31, 41, 69) and a covering layer as well as a flat resistance heating element (33, 43, 63, 73, 83) disposed between the covering layer and the base (31, 41, 69) and composed of a plastic bottom layer, a conductive intermediate layer provided with lead-ins and lead-outs, and a plastic cover layer, the resistance heating element (33, 43, 63, 73, 83) being glued to the base with the aid of an adhesive compound (32, 42, 62, 72, 82) that adheres to both the base (31, 41, 69) and to the free plastic surface of the bottom layer (36, 44) of the resistance heating element, while the covering layer is glued to the free surface of the plastic cover layer (38, 46) with the aid of an adhesive compound (34, 48) that adheres to both the surface of this plastic cover layer and the side of the covering layer facing away from the visible side, *characterized* in that the covering layer consists of ceramic shaped bodies, in particular tiles (12 to 23, 35, 49, 61, 71, 81), and the cover and bottom layers of the resistance heating element (33, 43, 63, 73, 83) are formed of polyester, and in that the resistance heating element located between the base and the covering of ceramic tiles is locally perforated, e.g. punched (47), and in that the base and the covering (49) of ceramic shaped bodies are interconnected by means of an adhesive (42, 48) which penetrates the punched holes and adheres at least to the ceramic shaped bodies and to the base.

2. The wall, ceiling and/or floor construction of claim 1, characterized in that the edges of the holes in the cover and bottom layers are welded together.

3. The wall, ceiling and/or floor construction of claim 1, characterized in that an insulating tubular rivet (66, 67) is inserted into each hole.

4. The wall, ceiling and/or floor construction of claim 1, characterized in that a piece of tubing (74) made of an insulating material is inserted into each hole.

5. The wall, ceiling and/or floor construction of claim 1, characterized in that an insulating plug (85) is inserted into each hole, said plug having a passage that is optionally bored in subsequently.

6. The wall, ceiling and/or floor construction of claim 1, characterized in that the resistance heating element is divided into sections leaving areas not covered thereby, the sections communicate with each other electrically and local perforations of the resistance heating element are provided in the areas not covered by the resistance heating element.

7. A wall, ceiling and/or floor construction comprising a plastered or unplastered base (31, 41, 69) and a covering layer as well as a flat resistance heating element (33, 43, 63, 73, 83) disposed between the covering layer and the base (31, 41, 69) and composed of a plastic bottom layer, a conductive intermediate layer provided with lead-ins and lead-outs, and a plastic cover layer, the resistance heating element (33, 43, 63, 73, 83) being glued to the base with the aid of an adhesive compound (32, 42, 62, 72, 82) that adheres to both the base (31, 41, 69) and to the free plastic surface of the bottom layer (36, 44) of the resistance heating element, while the covering layer is glued to the free surface of the plastic cover layer (38, 46) with the aid of an adhesive compound (34, 48) that adheres to both the surface of this plastic cover layer and the side of the covering layer facing away from the visible side, *characterized* in that the covering layer consists of ceramic shaped bodies, in particular tiles (12 to 23, 35, 49, 61, 71, 81), and the cover and bottom layers are formed of polyester, and in that the resistance layer is adapted to be displaced locally by the application of pressure to the cover and bottom layers, and in that the cover and bottom layers are welded together by ultrasonic action in areas formed by this displacement of the resistance layer.

**Revendications**

1. Structure de mur, de plafond et/ou de plancher, constituée d'un sous-bassement (31, 41, 69), non crépi ou crépi, et d'un couche de revêtement, ainsi que d'un élément, en nappe mince, de chauffage par résistance (33, 43, 63, 73, 83), disposé entre la couche de revêtement et le sousbassement (31, 41, 69) élément qui se compose d'une souscouche de matière plastique, d'une couche intermédiaire conductrice, comportant des conducteurs d'arrivée et de départ, et d'une couche de recouvrement en matière plastique, l'élément de chauffage par résistance (33, 43, 63, 73, 83) étant collé sur le sous-bassement au moyen d'une composition de collage (32, 42, 62, 72, 82), qui fait prise aussi bien sur le sousbassement (31, 41, 69) que sur la surface supérieure libre, en matière plastique, de la sous-couche (36, 44) de l'élément de chauffage par résistance, tandis que la couche de revêtement sur la surface supérieure libre de la couche de recouvrement en matière plastique (38, 46) est collée au moyen d'une composition de collage (34, 48) faisant prise aussi bien sur la surface supérieure libre de cette couche de recouvrement en matière plastique que sur la face de la couche de revêtement tournée du côté opposé à la face visible, caractérisée en ce que la couche de revêtement est constituée de corps moulés céramiques, en particulier de plaques (12 à 23, 35, 49, 61, 71, 81), et que la couche de recouvrement et la souscouche de l'élément de chauffage par résistance (33, 43, 63, 73, 83) est formée de polyester, et en ce que l'élément de chauffage par résistance se trouvant entre le sous-bassement et la couche de revêtement en plaques céramiques est ajouré localement, par exemple est poinçonné (47), et en ce que sous-bassement et couche de revêtement (49) en corps moulés céramiques sont reliés ensemble au moyen d'un moyen de collage (42, 48) traversant les trous poinçonnés et faisant prise au moins sur les corps moulés céramiques et sur le sous-bassement.

2. Structure de mur, de plafond et/ou de plancher suivant la revendication 1, caractérisée en ce que les bords des trous de la couche de recouvrement et la sous-couche sont soudées ensemble.

3. Structure de mur, de plafond et/ou de plancher suivant la revendication 1, caractérisée en ce que, dans chacun des trous, est inséré un rivet creux (66, 67).

4. Structure de mur, de plafond et/ou de plancher suivant la revendication 1, caractérisée en ce que, dans chacun des trous, est inséré un l'élément de tuyau flexible (74) réalisé dans un matériau isolant.

5. Structure de mur, de plafond et/ou de plancher suivant la revendication 1, caractérisée en ce que, dans chacun des trous, est inséré un bouchon isolant (85) qui présente une ouverture traversante forée, le cas échéant, par la suite.

6. Structure de mur, de plafond et/ou de plancher suivant la revendication 1, caractérisée en ce que l'élément de chauffage par résistance est divisé en unités de surface, en maintenant des zones non couvertes par lui, les surfaces élémentaires sont reliées entre elles électriquement, et, dans les zones non couvertes par l'élément de chauffage par résistance, des découpures de l'élément de chauffage par résistance sont prévues localement.

7. Structure de mur, de plafond et/ou de plancher, constituée d'un sous-bassement (31, 41, 69), non crépi ou crépi, et d'une couche de revêtement, ainsi que d'un élément, en nappe mince, de chauffage par résistance (33, 43, 63, 73, 83), disposé entre la couche de revêtement et le sousbassement (31, 41, 69), élément qui se compose d'une souscouche de matière plastique, d'une couche intermédiaire conductrice, comportant des conducteurs d'arrivée et de départ, et d'une couche de recouvrement en matière plastique, l'élément de chauffage par résistance (33, 43, 63, 73, 83) étant collé sur le sous-bassement au moyen d'une composition de collage (32, 42, 62, 72, 82), qui fait prise aussi bien sur le sousbassement (31, 41, 69) que sur la surface supérieure libre, en matière plastique, de la sous-couche (36, 44) de l'élément de chauffage par résistance, tandis que la couche de revêtement sur la surface supérieure libre de la couche de recouvrement en matière plastique (38, 46) est collée au moyen d'une composition de collage (34, 48) faisant prise aussi bien sur la surface supérieure libre de cette couche de recouvrement en matière plastique que sur la face de la couche de revêtement tournée vers la face visible, caractérisée en ce que

la couche de revêtement est constituée de corps moulés céramiques, en particulier de plaques (12 à 23, 35, 49, 61, 71, 81), et que la couche de recouvrement et la souscouche de l'élément de chauffage par résistance (33, 43, 63, 73, 83) est formée de polyester, et en ce que la couche résistante est réalisée de telle façon qu'en exerçant une pression, elle puisse être localement refoulée sur la couche de recouvrement et la sous-couche et en ce que la couche de recouvrement et la sous-couche sont soudées l'une avec l'autre par action d'ultrasons sur des zones réalisées au moyen d'un tel refoulement de la couche résistante.

FIG. 1

FIG. 2

FIG. 3

FIG. 4

FIG. 5

FIG. 6